# EUROPEAN PATENT SPECIFICATION

(11) **EP 0 574 488 B1**
(45) Date of publication and mention of the grant of the patent: **15.05.1996**
(21) Application number: 92906532.4
(22) Date of filing: 25.02.1992
(51) Int. Cl.: F16L 55/165, F16L 55/18, F16L 58/10, B29C 63/34

(54) **METHOD FOR FITTING AN INNER TUBE IN AN EXISTING PIPELINE USING AIR VENTING MEANS, AND PIPELINE WITH INNER TUBE OF THERMOPLASTICS**
VERFAHREN ZUR ANBRINGUNG EINES INNEREN ROHRES IN EINER BESTEHENDEN ROHRLEITUNG UNTER BENUTZUNG VON LUFTABFÜHRMITTELN, UND ROHRLEITUNG MIT EINEM THERMOPLASTISCHEN INNENROHR
PROCEDE D'APPLICATION D'UN TUBE INTERIEUR DANS UN CONDUIT EXISTANT EN UTILISANT DES MOYENS D'AERATION, ET CONDUIT AVEC UN TUBE INTERIEUR EN THERMOPLASTIQUE

(30) Priority: 06.03.1991 NL 9100403
(43) Date of publication of application: 22.12.1993
(73) Proprietor: WAVIN B.V., NL-8011 CW Zwolle (NL)
(72) Inventor: VAN DIJK, Berend, Jan, NL-7776 XA Slagharen (NL); LODDER, Bernhard, NL-7772 EW Hardenberg (NL)
(74) Representative: van der Veken, Johannes Adriaan
(86) International application number: NL9200038
(87) International publication number: WO9215818

(56) References cited:
- EP-A- 0 298 125
- GB-A- 2 032 043
- US-A- 4 818 324

## Description

The invention relates to a method for fitting an inner tube in an existing pipeline, by inserting an inner tube of thermoplastic plastic with a smaller external diameter than the internal diameter of the pipeline, followed by radial enlargement of the diameter of the inner tube until the inner tube rests against the inside wall of the pipeline, using heat and internal pressure, and cooling down under internal pressure and using gas discharge promoting means for removal of gases being present between the inside of the pipeline and the outside of the inner tube.

Such a method for lining a pipeline, wherein venting means promote discharge of gases from the region between the pipeline and opposite inner tube, is known from GB 2 032 043.

Such a method for the protection of an existing pipeline from erosion, corrosion and deposits of solids on the surface, and for making walls of such a pipeline impervious, is also known from US Patent Specification 2,794,758. The inserted inner tube, in particular of polyethylene, in this case has a diameter which is about 5 to 20% smaller than the internal diameter of the pipeline. The inner tube is inflated, by means of a pressure medium introduced into the inner tube, until it lies taut against the inside of the pipeline.

On the other hand, it is known from US Patent Specification 4,818,314 to provide a plastic lining in existing low-pressure pipelines and also high-pressure pipelines by placing an inner tube made of polyethylene of very high molecular weight in the pipeline, which inner tube is enlarged diametrically approximately 6% through use of a warm liquid under pressure.

All these methods present the disadvantage that when a warm pressure medium acts directly over the entire length of the inside of the inner tube, air can easily remain behind between the inner tube and the pipeline. This leads to a poor lining of the inside of the pipeline.

In order to overcome this disadvantage it is proposed in European Patent Publication 0,298,125 that the inner tube should gradually be enlarged radially. However, this complex method, requiring the use of special devices, is found to be less suitable with the use of an inner tube of small diameter.

The object of the invention is now to provide a method in which inclusion of air between pipeline and inner tube expanded therein can be prevented in a simple manner without gradual deformation.

This object is achieved according to the invention in that gas discharge promoting means extending over the whole axial lenght of the inner tube to be enlarged are provided between the inside of the pipeline and the outside of the inner tube.

When gas discharge promoting means are used, the inclusion of air between the outside of the inner tube resting taut against the inside of the pipeline is prevented by gradually increasing the inner tube in diameter simultaneously over its entire length .

Such gas discharge promoting means preferably comprise thread-type elements extending at least in the longotudinal direction over the whole length of the inner tube to be enlarged.

Suitable embodiments are ribs, filaments or threads made of metal, plastic filaments, glass filaments, such as glass rovings, or rubber threads.

According to a particularly suitable embodiment, the gas discharge promoting means comprise axially or helically running ribs extruded onto the inner tube.

A woven hose of the above-mentioned threads which can be stretched in the radial direction can, however, also be used.

For obtaining a lining of good quality, the gas discharge promoting means can be deformed when the outside of the inner tube is being pressed taut against the inside of the pipeline, in such a way that the outside of the inner tube lies essentially taut against the inside of the pipeline, forming little channels.

It is pointed out that a tube with ribs on the outside wall is known per se, but these tubes are not subjected to radial expansion to form a lining in a pipeline.

In this connection reference can be made to German Offenlegungsschrift 2,555,605, which discloses a plastic tube with several longitudinal ribs serving to exert a turning moment on the tube. This tube is not, however, increased in diameter.

In order to ensure a good connection between the inside wall of the pipeline and the outside of the inner tube, the height of the thread-type elements is less than 5% of the external diameter of the inner tube before the radial enlargement of its diameter.

The method according to the invention is particularly suitable for inserting an inner tube into an existing pipeline in which only slight diameter reductions occur, and it can also be used in particular, but not exclusively, for small pipes with bends, narrowed parts and the like.

The ratio of the external diameter of the inner tube to the internal diameter of the pipeline is expediently less than 0.6 at the time of insertion.

When an inner tube of the type described above is used, in particular an inner tube in which the ratio is approximately 0.55, it is possible to work with an inner tube which is easy to introduce into an existing pipeline, and which is then pressed against the inside wall of the pipeline by means of a pressure medium.

The method according to the invention has in particular advantages for the lining of pipelines made of pipes which can give off undesirable substances to a medium being conveyed through the pipes. This applies in particular to lead water pipes which are mechanically still in good condition, but which have the disadvantage of the undesirable giving off of lead into the drinking water.

In the case of service pipes in particular, i.e. from the main pipe to the private property or the user's water meter, it is very difficult to dig up these pipes, since this generally leads to serious damage to the footpath, plants and the paving.

Although conventional thermoplastic plastics which are easily stretched radially, such as polyvinyl chloride, polyethylene or polypropylene, can be used for the material of the inner tube, the inner tube is advantageously made of a thermoplastic polyester, in particular polyethylene terephthalate.

The last-mentioned material stretches radially very well under the right conditions, and even very thin walls with a thickness of less than 1 mm, preferably less than 0.4 mm, after stretching do not show any formation of cracks in the walls.

This makes it possible to start with a thin-walled inner tube, which further facilitates the insertion.

If desired, the inner tube can be heated to above the glass transition temperature during insertion, in order to make the material more flexible, but the material is then preferably not yet so hot that the inner tube is axially stretched during the insertion. The temperature of the material must remain below the crystalline melting temperature, in order to obtain optimum properties after stretching.

In order to simplify the insertion of the inner tube 2, it is also possible to press it oval or flat to a greater or lesser extent. This has great advantages for the storage of the inner tube on a reel, since it means that more tube can be rolled onto a reel and the forces are smaller during reeling.

It is clear that with the use of a thin-walled inner tube the final inner tube forms an inner covering serving mainly as a sort of lining of the inside wall of the existing pipeline, and in general makes little or no contribution to the mechanical strength of the pipeline. The stretching does take advantage of the improved physical properties, for example the resistance to stress corrosion.

Of course, it is also possible to use the method in pipes with mechanical faults such as leaky connections, steel pipes affected by corrosion, and sewers etc. In that case an inner tube of greater wall thickness must be used, so that after stretching the inner tube can withstand the full internal pressure of the medium conveyed through the pipeline or external loads such as ground and traffic loads. In that case optimum use is then made of the mechanical properties of the material of the inner tube, which are also greatly improved by the stretching.

It is pointed out that it is known that many physical and mechanical properties of tubes made of thermoplastic plastics can be improved considerably by stretching, but such methods can be used only in industrial circumstances for making stretched tubes in accurately controlled conditions, and not for lining existing pipelines.

The invention also relates to a pipeline for conveying medium, having a plastic inner tube lying against the inside wall of the pipeline, wherein the pipeline comprises material which can be given off into a medium flowing through the pipeline, and the inner tube is obtained by radial enlargement of the diameter of the inner tube by means of heat and internal pressure and cooling down under internal pressure and gas discharge promoting means are provided between the inside of the pipeline and the outside of the inner tube over the whole length of the inner tube to be enlarged.

A device for fitting an inner tube in an existing pipeline, comprises a coupling piece which can be fixed detachably to an existing pipeline, and through which an inner tube can be guided, wherein the coupling piece has an internal diameter essentially equal to the external diameter of an unstretched inner tube and is provided with fixing means for fixing the inner tube in a tension-resistant manner at the side facing away from the connection to an existing pipeline, and with medium admission means for admitting a heating and/or pressure medium. This device has the advantage that for the coupling piece it is possible to use a standard product which with slight adaptations can be used for different dimensions of inner tube, and that a good, tension-resistant sealing connection is possible even in the case of a soft, readily stretching inner tube.

The coupling piece is advantageously provided with air extraction means for the purpose of removing the air from the space between the inside of a pipeline and the outside of an inner tube.

The coupling piece is very advantageously provided with a loose inner sleeve with an internal diameter which is essentially equal to the external diameter of an unstretched inner tube. This makes it possible to use a standard coupling and merely to make one suitable inner sleeve for the required measurement of inner tube.

It is particularly advantageous for the connections of the coupling piece to a pipeline and an inner tube to be in the form of tension-resistant union connections.

The invention will now be explained with reference to an example of an embodiment shown in the drawing, in which:
Fig. 1 shows a cross-section of an existing pipeline and an inner tube fitted therein, before stretching;
Fig. 2 shows the same pipeline with the inner tube fitted stretched therein;
Fig. 3 shows a variant of an embodiment according to Fig. 1; and
Fig. 4 shows a device for fitting an inner tube in an existing pipeline, comprising a coupling piece for connecting the pipeline, the inner tube and heating and/or pressure media;
Fig. 5 shows a pipeline with inner tube provided with an end flange;
Fig. 6 shows a device according to Fig. 4, in which during radial enlargement the inner tube is provided with an end flange part extending to the external diameter of the pipeline; and
Fig. 7 shows an embodiment of a connection of an inner tube with end flange to another pipeline.

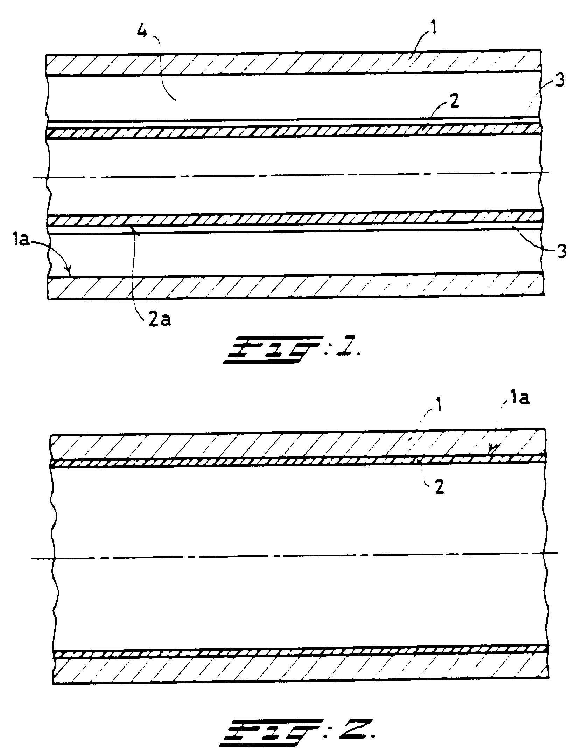

Fig. 1 shows a pipeline made of a lead pipe 1 with an external diameter of 24 mm and an internal diameter of 12.5 mm.

An inner tube 2 of polyethylene terephthalate, 6.0 x 0.5 mm, is fitted in said lead pipe 1, which is a length of approximately six metres, after preheating to 50°C. Axially running ribs 3, which are 0.2 mm thick and 0.2 mm wide, are formed on the inner tube 2 during its formation by extrusion.

The inner tube 2 is subsequently heated with hot water to 90°C and then expanded by increasing the water pressure to 5 bar.

The inner tube 2 is then stretched radially in a uniform manner and comes to rest taut against the inside wall of the lead pipe 1 as an inner tube lining 2'. The air present in the space 4 between the outside 2a of the inner tube 2 and the inside 1a of the lead pipe 1 can easily escape during the inflation of the inner tube 2 through the presence of the axially running ribs 3. After removal of the water, accelerated cooling then takes place by blowing through with compressed air.

Polyethylene terephthalate inner tubes 12.8 mm in diameter and 1.0 mm thick, with axially running ribs 0.3 mm wide and 0.3 mm high, are stretched in a similar way to a diameter of 28 mm, and tubes 4 x 0.5 mm to a diameter of 10 mm.

In the case of these polyethylene terephthalate inner tubes it was found to be important for the material to have very little or no axial stretching before the radial stretching, otherwise the already axially stretched tube has become too stiff for it to be inflated radially.

For polyethylene terephthalate a radial stretching of 2 to 5 times the original diameter is found to be very readily possible.

Of course, it is also possible to work with copper pipes or sewer pipes made of the conventional materials for them.

It will be clear that, instead of ribs 3 extruded onto tne inner tube 2, it is also possible to work with ribs, threads or filaments made of metal, glass fibres, rubber, polyester yarns or the like, which can then be fitted loose with the inner tube 2 in the pipeline 1. Of course, the ribs, threads or filaments can also be attached to the inner tube by means of an adhesive or by welding.

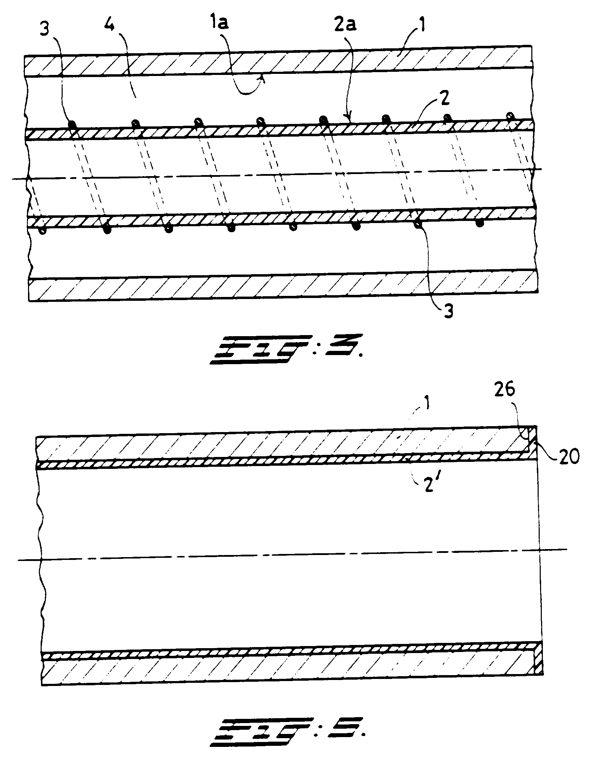

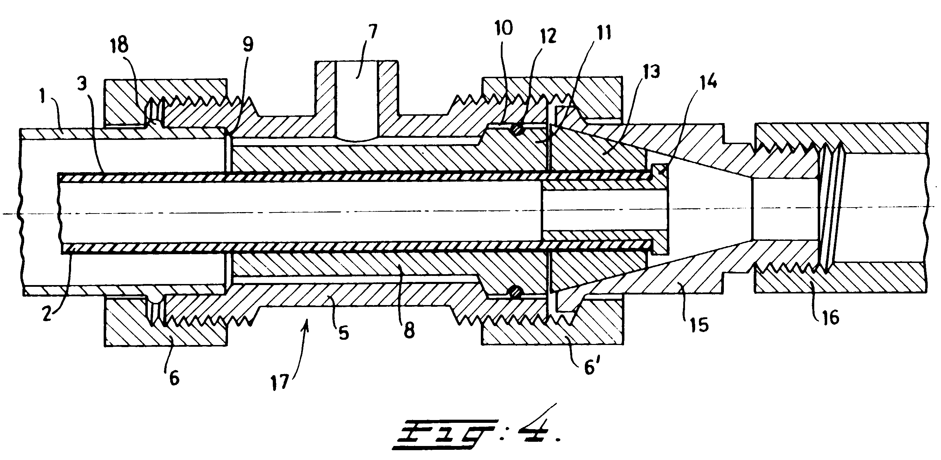

Fig. 3 shows an embodiment in which the rib 3 is a helically running filament of rubber or thermoplastic plastic, preferably the same as that of the inner tube. When the outside 2a of the inner tube 2 lies against the inside 1a of the pipeline, the filament is pressed into the wall of the inner tube, so that the inner tube 2 interacts virtually perfectly with the inside of pipeline 1.

The height or thickness of the ribs is preferably no more than 5% of the external diameter of the inner tube before the radial expansion of said inner tube 2.

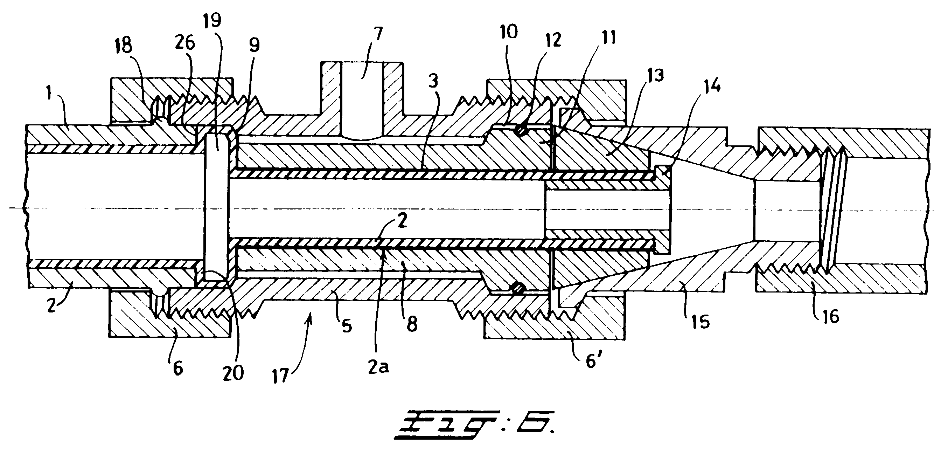

Fig. 4, which shows a device for fitting an inner tube 2 in an existing pipeline 1, shows a coupling piece 17 which is connected to an existing pipeline 1 by tightening a coupling nut 6 on the housing 5 of the coupling piece. Using a cutting ring 18 on the pipeline 1, the coupling piece 17 can be fixed detachably and in a tension-resistant manner to the pipeline.

Pipeline 1 lies with its end face against abutting face 9 of housing 5.

The coupling piece 17 is provided with a vent 7. Placed in the coupling piece 17, for which a conventional T-piece can be used, is a loose inner sleeve 8, which with a widened part is placed in the chamber 10 at the side of the coupling piece facing away from the connection to the pipeline, said sleeve being sealed by means of a rubber ring 12.

The external diameter of the inner sleeve 8 is smaller than the internal diameter of the housing 5 of the coupling piece 17, so that air venting of the space between the inside of the pipeline 1 and the outside of the inner tube 2 which is connected through to vent 7 is possible.

Inner tube 2 with longitudinal ribs 3 is inserted through the inner sleeve 8 and provided at the end with an insert sleeve 14. A conical clamping ring 13 is fitted around the end of the inner tube 2. Tightening of the coupling nut 6' produces a connection of the inner tube 2 in a tension-resistant manner to coupling piece 17 through the fixing of conical ring 15 on clamping ring 13. Where a rubber clamping ring 13 is used, it can provide for fixing and for sealing at the same time. The insert sleeve 14 prevents deformation of the inner tube 2, and thereby inadequate fixing and/or sealing. A connection 16, which serves to feed in a heating medium such as steam and/or a pressure medium such as compressed air, is fitted on the conical ring 15.

A method for stretching is as follows. After fitting coupling pieces 17 on either side of the pipeline 1 with the inner tube 2 fitted, a hot medium such as steam is fed through until the inner tube is heated up sufficiently, the connection 16 is then shut off at one of the two sides and compressed air is admitted at the other side, causing the inner tube 2 to be stretched until it rests taut against the inside of the pipeline 1. The air lying between the inside of the pipeline 1 and the outside of the inner tube 2 can escape to the vent 7 during the stretching by way of the space between the inner sleeve 8 and the housing 5 of the coupling piece 17.

The inner tube 2 is then cooled down, the internal pressure being maintained. It can be advantageous here if the connection 16 shut off earlier is partially opened, so that while the internal pressure is maintained a throughflow of the compressed air is promoted, and the cooling down is accelerated as a result.

Finally, the coupling pieces 17 are removed, the part of the inner tube 2 projecting beyond the pipeline 1 is taken away, and the pipeline 1 is reconnected to the other parts of the mains of which it forms part.

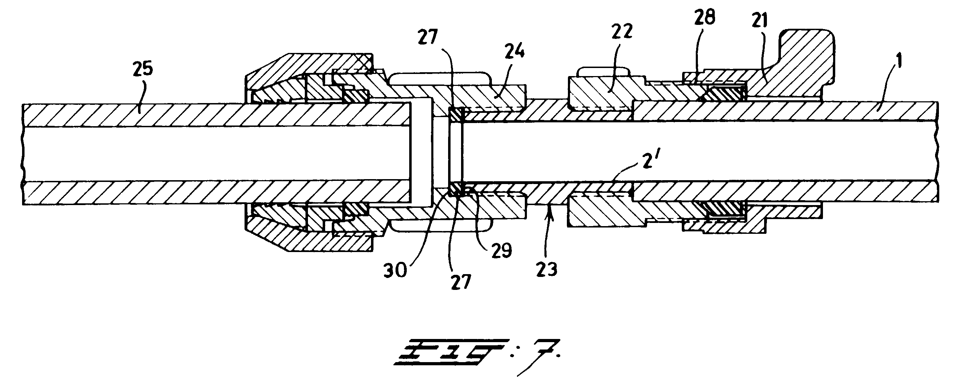

Fig. 6 shows the same device as that shown in Fig. 4, but the end face 26 ends at a distance from the opposite end 9 of the housing 5, with the result that a space 19 is formed.

When the inner tube 2 is inflated, it comes to rest against the walls bounding the space 19.

A sealing face or flange 20, running at right angles to the longitudinal axis of the pipe 1, is thereby produced on the end face 26 of the pipe 1, which certainly in the case of a lead pipe is thick. Of course, sealing face 20 can also run at an angle and therefore form a conical sealing face.

After the removal of coupling piece 17, the part of expanded inner tube 2 projecting out of the pipe 1 is cut off just at or near sealing face 20, so that a pipeline 1 with inner tube lining 2' and sealing flange 20 is produced (see Fig. 5).

By now placing a sealing ring against said flange 20 when connecting the lined pipe 1 to a connecting piece or following pipe section, it can be ensured that in the connection formed a medium flowing through the inner tube lining 2' cannot come into contact with the original pipe 1.

It is clear that such a design is very advantageous for the lining of lead water pipes 1.

Fig. 7 shows yet another embodiment, in which a part 21 of the coupling piece remains connected to the pipe 1 after the inflation of inner tube 2 to form inner tube lining 2' and flange 20. Said part 21 is a standard screw thread coupling 21 for lead pipes which is connected by means of screw thread 28 to a first coupling 22. First coupling 22 is connected to nipple 23. A second coupling 24 was connected to a coupling piece 17 or the like during the inflation of inner tube 2.

After removal of said coupling piece 17 following the inflation, the lined pipe 1 is connected to another pipe section 25. A sealing ring 27 is then placed between the end face 29 of nipple 23 lined by inner tube 2 and the breast 30 of second coupling 24.

## Claims

1. Method for fitting an inner tube in an existing pipeline by inserting an inner tube of thermoplastic plastic with a smaller external diameter than the internal diameter of the pipeline, followed by radial enlargement of the diameter of the inner tube until the inner tube rests against the inside wall of the pipeline, using heat and internal pressure, and cooling down under internal pressure and using gas discharge promoting means for removal of gases being present between the inside of the pipeline and the outside of the inner tube, **characterised in that** gas discharge promoting means (3) extending over the whole axial length of the inner tube to be enlarged are provided between the inside of the pipeline (1) and the outside of the inner tube (2).

2. Method according to claim 1, **characterised in that** the gas discharge promoting means (3) comprise thread-type elements extending at least in the longitudinal direction over the whole length of the inner tube to be enlarged.

3. Method according to claim 1 or 2, **characterised in that** the gas discharge promoting means are selected from: thread-type elements (3) running helically;
thread-type elements (3) being integral with the inner tube (2);
thread-type elements (3) forming a radially expandable hose;
thread-type elements forming ribs running axially or helically on the outside of the inner tube;
metal, plastic, preferably thermoplastic plastic, glass or rubber gas discharge promoting means, in particular thread-type elements;
and gas discharge promoting means (3) having a height being less than 5% of the external diameter of the inner tube (2) before the radial enlargement of its diameter.

4. Method according to one or more of the preceding claims 1 - 3, **characterised in that** on insertion the ratio of the external diameter of the inner tube (2) to the internal diameter of the pipeline (1) is smaller than 0.6 and preferably greater than 0.2; preferably said ratio lies between 0.52 and 0.56.

5. Method according to one or more of the preceding claims 1 - 4, **characterised in that** on insertion the inner tube (2) is heated to a temperature above the glass transition temperature of the plastic and below the crystalline melting point.

6. Method according to one or more of the preceding claims, **characterised in that** the inner tube is made of a thermoplastic polyester, preferably polyethylene terephthalate.

7. Method according to one or more of the preceding claims, **characterised in that** after radial stretching the inner tube has a wall thickness of less than 1 mm, preferably less than 0.5 mm and/or after radial stretching the inner tube (2) has a wall thickness which is resistant to an internal pressure of more than 1 bar.

8. Method according to one or more of the preceding claims, **characterised in that** the existing pipeline (1) comprises pipes, in particular lead pipes, having in their wall substances which can be given off to a medium being conveyed through said pipeline.

9. Method according to one or more of the preceding claims, **characterised in that** after radial stretching the inner tube (2) is provided with a sealing face (20) extending in the radial direction at an angle relative to the longitudinal axis of the pipeline (1), preferably said sealing face (20) runs essentially at right angles to the longitudinal axis of inner tube (2).

10. Pipeline for conveying medium, having a plastic inner tube lying against the inside wall of the pipeline, which has been obtained by inserting an inner tube of thermoplastic plastic with a smaller external diameter than the internal diameter of the pipeline, followed by radial enlargement of the diameter of the inner tube until the inner tube rests against the inside wall of the pipeline, using heat and internal pressure, and cooling down under internal pressure and using gas discharge promoting means for removal of gases being present between the inside of the pipeline and the outside of the inner tube, the pipeline comprises material which can be given off into a medium flowing through the pipeline, **characterised in that** the gas discharge promoting means (3) are provided between the inside of the pipeline and the outside of the inner tube (2) over the whole axial length of the inner tube (2) to be enlarged.

11. Pipeline according to claim 10, **characterised in that** the pipeline is made of lead pipes for conveying drinking water, and the inner tube is made of a reinforced thermoplastic polyester obtained by stretching the inner tube with an initial external diameter which is 0.2 to 0.6, preferably 0.52 to 0.56, times the value of the internal diameter of the pipeline.

12. Pipeline according to claim 10 or 11, **characterised in that** the inner tube (2) is provided with a sealing face (20) extending in the radial direction at an angle, preferably at right angles to the inner tube lining (2').

## Patentansprüche

1. Verfahren zur Anbringung eines inneren Rohres in einer bestehenden Rohrleitung durch Einsetzen eines Innenrohres aus thermoplastischem Kunststoff mit einem kleineren Außendurchmesser als der Innendurchmesser der Rohrleitung, gefolgt von einer radialen Aufweitung des Durchmessers des Innenrohres, bis das Innenrohr an der Innenwand der Rohrleitung anliegt, unter Verwendung von Wärme und Innendruck und Herunterkühlen unter Innendruck und Verwendung von Gasaustrittsbeschleunigungsmitteln zum Abführen von zwischen der Innenseite der Rohrleitung und der Außenseite des Innenrohrs vorhandenen Gasen, dadurch gekennzeichnet, daß sich über die gesamte axiale Länge des aufzuweitenden Innenrohrs erstreckende Gasaustrittsbeschleunigungsmittel (3) zwischen der Innenseite der Rohrleitung (1) und der Außenseite des Innenrohrs (2) vorgesehen sind.

2. Verfahren nach Anspruch 1, dadurch gekennzeichnet, daß die Gasaustrittsbeschleunigungsmittel (3) fadenartige Elemente umfassen, die sich zumindest in Längsrichtung über die gesamte Länge des aufzuweitenden Innenrohrs erstrecken.

3. Verfahren nach Anspruch 1 oder 2, dadurch gekennzeichnet, daß die Gasaustrittsbeschleunigungsmittel ausgewählt werden aus:
fadenartigen Elementen (3), die schraubenlinienförmig verlaufen,
fadenartigen Elementen (3), die einstückig mit dem Innenrohr (2) sind,
fadenartigen Elementen (3), die einen radial aufweitbaren Schlauch bilden,
fadenartigen Elementen, die axial oder schraubenlinienförmig auf der Außenseite des Innenrohrs verlaufende Rippen bilden,
Gasaustrittsbeschleunigungsmitteln (3) aus Metall, Kunststoff, vorzugsweise thermoplastischem Kunststoff, Glas oder Gummi mit einer Höhe, die weniger als 5% des Außendurchmessers des Innenrohrs (2) vor der radialen Aufweitung seines Durchmessers beträgt.

4. Verfahren nach einem oder mehreren der vorhergehenden Ansprüche 1 bis 3, dadurch gekennzeichnet, daß beim Einsetzen das Verhältnis des Außendurchmessers des Innenrohrs (2) zum Innendurchmesser der Rohrleitung (1) kleiner ist als 0,6 und vorzugsweise größer als 0,2 und dieses Verhältnis vorzugsweise zwischen 0,52 und 0,56 liegt.

5. Verfahren nach einem oder mehreren der vorhergehenden Ansprüche 1 bis 4, dadurch gekennzeichnet, daß nach dem Einsetzen das Innenrohr (2) auf eine Temperatur oberhalb der Glasübergangstemperatur des Kunststoffes und unterhalb des Kristallinschmelzpunktes erwärmt wird.

6. Verfahren nach einem oder mehreren der vorhergehenden Ansprüche, dadurch gekennzeichnet, daß das Innenrohr von einem thermoplastischen Polyester, vorzugsweise Polyethylenterephthalat, gebildet ist.

7. Verfahren nach einem oder mehreren der vorhergehenden Ansprüche, dadurch gekennzeichnet, daß das Innenrohr nach dem radialen Strecken eine Wanddicke von weniger als 1 mm, vorzugsweise weniger als 0,5 mm besitzt und/oder das Innenrohr (2) nach dem radialen Strecken eine Wanddicke aufweist, die einen Innendruck von mehr als 1 bar aushält.

8. Verfahren nach einem oder mehreren der vorhergehenden Ansprüche, dadurch gekennzeichnet, daß die vorhandene Rohrleitung (1) Rohre, insbesondere Bleirohre, umfaßt, die in ihrer Wand Substanzen haben, welche an ein durch die Rohrleitung gefördertes Medium abgegeben werden können.

9. Verfahren nach einem oder mehreren der vorhergehenden Ansprüche, dadurch gekennzeichnet, daß das Innenrohr (2) nach dem radialen Strecken mit einer Dichtungsfläche (20) versehen ist, die sich in radialer Richtung mit einem Winkel in bezug auf die Längsachse der Rohrleitung (1) erstreckt, wobei die Dichtungsfläche (20) vorzugsweise im wesentlichen rechtwinklig zur Längsachse des Innenrohrs (2) verläuft.

10. Rohrleitung zur Förderung eines Mediums, mit einem an der Innenwand der Rohrleitung anliegenden Kunststoffinnenrohr, erhalten durch Einsetzen eines Innenrohrs aus thermoplastischem Kunststoff mit einem kleineren Außendurchmesser als dem Innendurchmesser der Rohrleitung, gefolgt von einer radialen Aufweitung des Durchmessers des Innenrohrs, bis das Innenrohr an der Innenwand der Rohrleitung anliegt, unter Verwendung von Wärme und Innendruck und Herunterkühlen unter Innendruck und Verwendung von Gasaustrittsbeschleunigungsmitteln zum Abführen von zwischen der Innenseite der Rohrleitung und der Außenseite des Innenrohrs vorhandenden Gasen, wobei die Rohrleitung Material umfaßt, das in ein durch die Rohrleitung fließendes Medium abgegeben werden kann, dadurch gekennzeichnet, daß die Gasaustrittsbeschleunigungsmittel (3) zwischen der Innenseite der Rohrleitung und der Außenseite des Innenrohrs (2) auf der gesamten axialen Länge des aufzuweitenden Innenrohrs (2) vorgesehen sind.

11. Rohrleitung nach Anspruch 10, dadurch gekennzeichnet, daß die Rohrleitung von Bleirohren zum Fördern von Trinkwasser gebildet ist und das Innenrohr von einem verstärkten thermoplastischen Polyester gebildet ist, erhalten durch Strecken des Innenrohrs mit einem anfänglichen Außendurchmesser, der 0,2 bis 0,6, vorzugsweise 0,52 bis 0,56, mal den Wert des Innendurchmessers der Rohrleitung beträgt.

12. Rohrleitung nach Anspruch 10 oder 11, dadurch gekennzeichnet, daß das Innenrohr (2) mit einer Dichtungsfläche (20) versehen ist, die in radialer Richtung winklig, vorzugsweise rechtwinklig, zur Innenrohrauskleidung (2'), verläuft.

## Revendications

1. Procédé d'installation d'un tube intérieur dans une conduite existante par l'insertion d'un tube intérieur en matière thermoplastique ayant un diamètre extérieur inférieur au diamètre intérieur de la conduite, suivie par un élargissement radial du diamètre du tube intérieur jusqu'à ce que le tube intérieur s'appuie contre la paroi intérieure de la conduite, à l'aide de chaleur et d'une pression interne, et par un refroidissement sous pression interne et à l'aide de moyens favorisant une décharge de gaz pour évacuer les gaz présents entre la face intérieure de la conduite et la face extérieure du tube intérieur, **caractérisé en ce que** des moyens (3) favorisant une décharge de gaz qui s'étendent sur toute la longueur axiale du tube intérieur destiné à être élargi sont prévus entre la face intérieure de la conduite (1) et la face extérieure du tube intérieur (2).

2. Procédé selon la revendication 1, **caractérisé en ce que** les moyens (3) favorisant une décharge de gaz comprennent des éléments de type filets qui s'étendent au moins dans la direction longitudinale sur toute la longueur du tube intérieur destiné à être élargi.

3. Procédé selon la revendication 1 ou 2, **caractérisé en ce que** les moyens favorisant une décharge de gaz sont choisis dans le groupe constitué par :
des éléments de type filets (3) qui s'étendent hélicoïdalement;
des éléments de type filets (3) solidaires du tube intérieur (2);
des éléments de type filets (3) formant un tuyau extensible radialement;
des éléments de type filets formant des nervures qui s'étendent axialement ou hélicoïdalement sur la face extérieure du tube intérieur;
des moyens favorisant une décharge de gaz, en particulier des éléments de type filets, en métal, en matière plastique, de préférence thermoplastique, en verre ou en caoutchouc;
et des moyens (3) favorisant une décharge de gaz ayant une hauteur inférieure à 5% du diamètre extérieur du tube intérieur (2) avant l'élargissement radial du diamètre de celui-ci.

4. Procédé selon l'une au moins des revendications 1 à 3 précédentes, **caractérisé en ce qu'**au moment de l'insertion, le rapport du diamètre extérieur du tube intérieur (2) sur le diamètre intérieur de la conduite (1) est inférieur à 0,6 et de préférence supérieur à 0,2; de préférence ledit rapport se situe entre 0,52 et 0,56.

5. Procédé selon l'une au moins des revendications 1 à 4 précédentes, **caractérisé en ce qu'**au moment de l'insertion, le tube intérieur (2) est chauffé jusqu'à une température supérieure à la température de transition vitreuse de la matière plastique et inférieure au point de fusion cristalline.

6. Procédé selon l'une au moins des revendications précédentes, **caractérisé en ce que** le tube intérieur est fait d'un polyester thermoplastique, de préférence de polyéthylène téréphtalate.

7. Procédé selon l'une au moins des revendications précédentes, **caractérisé en ce qu'**après étirement radial, le tube intérieur a une épaisseur de paroi inférieure à 1 mm, de préférence inférieure à 0,5 mm, et/ou en ce qu'après étirement radial, le tube intérieur (2) a une épaisseur de paroi résistant à une pression interne supérieure à 1 bar.

8. Procédé selon l'une au moins des revendications précédentes, **caractérisé en ce que** la conduite existante (1) comprend des tubes, en particulier des tubes en plomb, comportant dans leur paroi des substances susceptibles d'être libérées dans un agent transporté à travers ladite conduite.

9. Procédé selon l'une au moins des revendications précédentes, **caractérisé en ce qu'**après étirement radial, le tube intérieur (2) est muni d'une face d'étanchéité (20) qui s'étend dans la direction radiale suivant un certain angle par rapport à l'axe longitudinal de la conduite (1), de préférence ladite face d'étanchéité (20) s'étend essentiellement à angle droit par rapport à l'axe longitudinal du tube intérieur (2).

10. Conduite pour transporter un agent, comportant un tube intérieur en matière plastique qui s'étend contre sa paroi intérieure, obtenu par l'insertion d'un tube intérieur en matière thermoplastique ayant un diamètre extérieur inférieur au diamètre intérieur de la conduite, suivie par un élargissement radial du diamètre du tube intérieur jusqu'à ce que celui-ci s'appuie contre la paroi intérieure de la conduite, à l'aide de chaleur et d'une pression interne, et par un refroidissement sous pression interne et à l'aide de moyens favorisant une décharge de gaz pour évacuer les gaz présents entre la face intérieure de la conduite et la face extérieure du tube intérieur, la conduite comportant un matériau susceptible d'être libéré dans un agent circulant à travers elle, **caractérisée en ce que** les moyens (3) favorisant une décharge de gaz sont prévus entre la face intérieure de la conduite et la face extérieure du tube intérieur (2) sur toute la longueur axiale du tube intérieur (2) destiné à être élargi.

11. Conduite selon la revendication 10, **caractérisée en ce que** la conduite est formée de tuyaux de plomb destinés à transporter de l'eau potable, et en ce que le tube intérieur est fait d'un polyester thermoplastique renforcé, obtenu par étirement du tube intérieur dont un diamètre extérieur initial représente 0,2 à 0,6 fois, de préférence 0,52 à 0,56 fois, la valeur du diamètre intérieur de la conduite.

12. Conduite selon la revendication 10 ou 11, **caractérisée en ce que** le tube intérieur (2) est muni d'une face d'étanchéité (20) qui s'étend dans la direction radiale suivant un certain angle, de préférence à angle droit par rapport au revêtement formant tube intérieur (2').
